# EUROPEAN PATENT APPLICATION

(11) **EP 2 164 186 A2**
(43) Date of publication of application: **17.03.2010**
(21) Application number: 09170026.0
(22) Date of filing: 11.09.2009
(51) Int. Cl.: H04B 7/06

(54) **Communication characteristic control method, pilot control method, base station and mobile station**

(30) Priority: 12.09.2008 JP 2008235768
(71) Applicant: FUJITSU LIMITED, Kawasaki-shi, Kanagawa 211-8588 (JP)
(72) Inventor: Ito, Akira, Kawasaki-shi Kanagawa 211-8588 (JP)
(74) Representative: Ward, James Norman

(57) **Abstract**

A control method in a mobile communication system comprising an antenna group including a plurality of antennas each transmitting different antenna identification information includes assigning identification information that allows distinction among antennas included in an antenna subgroup to each antenna included in the antenna subgroup, the antenna subgroup being part of the antenna group; notifying the correspondence between each antenna included in the antenna subgroup and the identification information to a mobile station; and the mobile station using the identification information to distinguish among the antennas included in the antenna subgroup based on the notified correspondence.

## Description

### CROSS-REFERENCE TO RELATED APPLICATIONS

This application is based upon and claims the benefit of priority of prior Japanese Patent Application No.2008-235768, filed on September 12, 2008, the entire contents of which are incorporated herein by reference.

### FIELD

Certain aspects of the present invention discussed herein are related to a radio communication technique, and to a communication characteristic control method, a pilot control method, a radio base station, and a radio mobile station.

### BACKGROUND

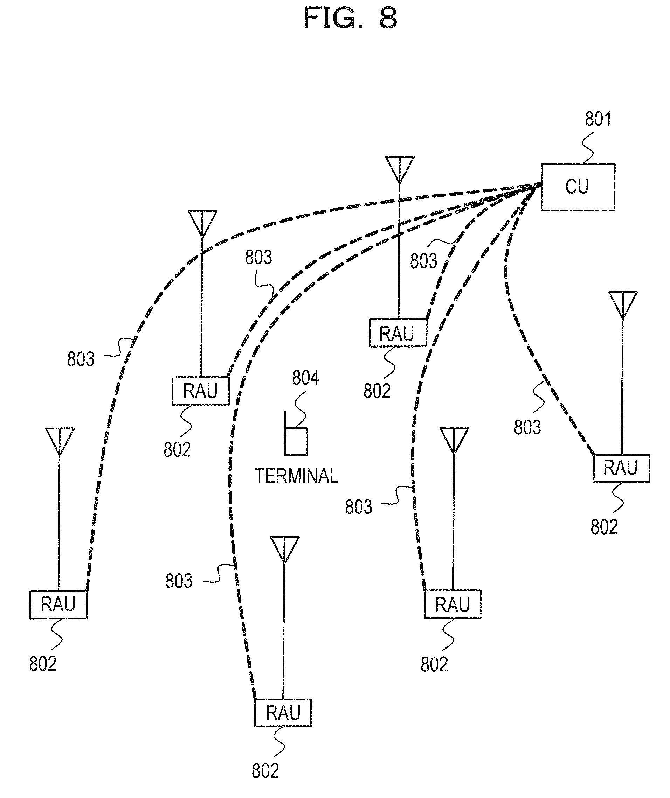

As illustrated in FIG. 8, a system is known in which a plurality of RAUs (Remote Antenna Units) 802 are connected to a controller (CU: Control Unit) 801 serving as a radio base station via wired lines 803 such as optical fibers, and digital processing including modulation and demodulation is performed in the CU 801. A radio mobile station 804 such as a mobile phone selects appropriate ones from the RAUs 802 to perform communication. Since the antennas are located in a distributed manner, such a system may be called a distributed antenna system.

Thus, the distributed antenna system can be utilized as a technology through which the combination, the phase rotation amount, the power ratio, and the like of a plurality of antennas located geographically apart from each other within a range of several kilometers may be centrally controlled. This central control allows construction of a stable and fast mobile radio network.

One technique available for use in the distributed antenna system is transmission diversity or MIMO (Multiple Input Multiple Output). Examples of transmission control suitable for use with this technique include a PMI (Pre-coding Matrix Indicator) control technique and/or a pilot signal control technique.

In the PMI control, the radio mobile station 804 selects a phase rotation amount and a power ratio of a transmission signal at each RAU 802 and feeds back this information to the CU 801 which serves as a radio base station. The CU 801 determines an appropriate phase rotation amount and power ratio at each RAU 802 based on the feedback from each radio mobile station 804. and The CU 801 then performs a transmission process.

In conventional art of the PMI control, the radio mobile station and the radio base station may have a common codebook that defines combinations of phase rotation amounts and power ratios. Instead of directly communicating values of the phase rotation amount and the power ratio, an index number (also known as a codebook index) in the codebook is communicated. This increases the efficiency of control communication.

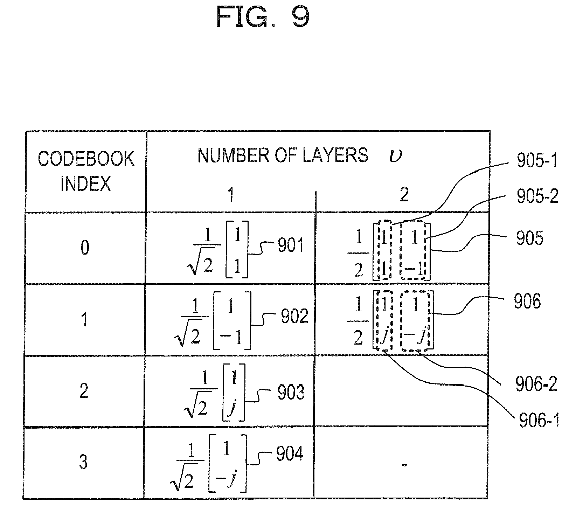

One technique for implementing a plurality of antennas in relation to the distributed antenna system is known as LTE (Long Term Evolution). The LTE system has been standardized by 3GPP (3rd Generation Partnership Program). Fig. 9 provides an example of a codebook used in the LTE system when two transmission antennas are utilized. In FIG. 9, "Codebook index" indicates codebook indexes. "Number of layers υ" indicates a case where one type of signal is communicated using the two antennas for "1", and a case where two types of signals are communicated using the two antennas for "2".

The value of each matrix element of each codebook matrix 901 to 906 indicates, relative to a transmission signal of one antenna, which phase rotation amount and power ratio should be used in transmission for the other antenna. Therefore, in order to rotate the phase of a transmission signal relative to one antenna, a corresponding code index is transmitted.

Each codebook matrix 901 to 904 for "Number of layers u = 1" has a column vector with two rows and one column, so that it indicates that the one type of signal is transmitted with the two antennas. This is an example of a transmission diversity scheme. The value of the first-row element of each column vector 901 to 904 corresponds to the first antenna, and the value of the second-row element corresponds to the second antenna. Since the values are relative, the first-row elements always have a value of "1".

For example, the codebook column vector 901 indicates that a transmission signal from the second antenna is transmitted with the same phase and same power ratio as the transmission signal of the first antenna.

The codebook column vector 902 indicates that the transmission signal from the second antenna is transmitted with a phase rotated by -180 degrees (= "-1") and the same power ratio as the transmission signal from the first antenna.

Further, the codebook column vector 903 indicates that the transmission signal from the second antenna is transmitted with a phase rotated by +90 degrees (= "j") and the same power ratio the signal transmitted from the first antenna.

The codebook column vector 904 indicates that the transmission signal from the second antenna is transmitted with a phase rotated by -90 degrees (= "-j") and the same power ratio as the signal transmitted from the first antenna.

On the other hand, each codebook matrix 905 and 906 for "Number of layers υ = 2" has column vectors with two rows and two columns, so that it indicates that the two types of signals are transmitted with the two antennas. This is the MIMO scheme. The value of a first-row element of each column vector 905-1, 905-2, 906-1, and 906-2 corresponds to the first antenna, and the value of a second-row element corresponds to the second antenna. Since the values are relative, the first-row elements always have a value of "1".

For example, the codebook column vector 905-1 indicates that the transmission signal of a first signal from the second antenna is transmitted with the same phase and power ratio the first signal transmitted from the first antenna.

The codebook column vector 905-2 indicates that the transmission signal of the second signal from the second antenna is transmitted with a phase rotated by -180 degrees (= "-1") and the same power ratio as the transmission signal of the second signal transmitted from the first antenna.

Further, the codebook column vector 906-1 indicates that the transmission signal of the first signal from the second antenna is transmitted with a phase rotated by +90 degrees (= "j") and the same power ratio as the transmission signal of the first signal transmitted from the first antenna.

The codebook column vector 906-2 indicates that the transmission signal of the second signal from the second antenna is transmitted with a phase rotated by -90 degrees (= "-j") and the same power ratio as the transmission signal of the second signal transmitted from the first antenna.

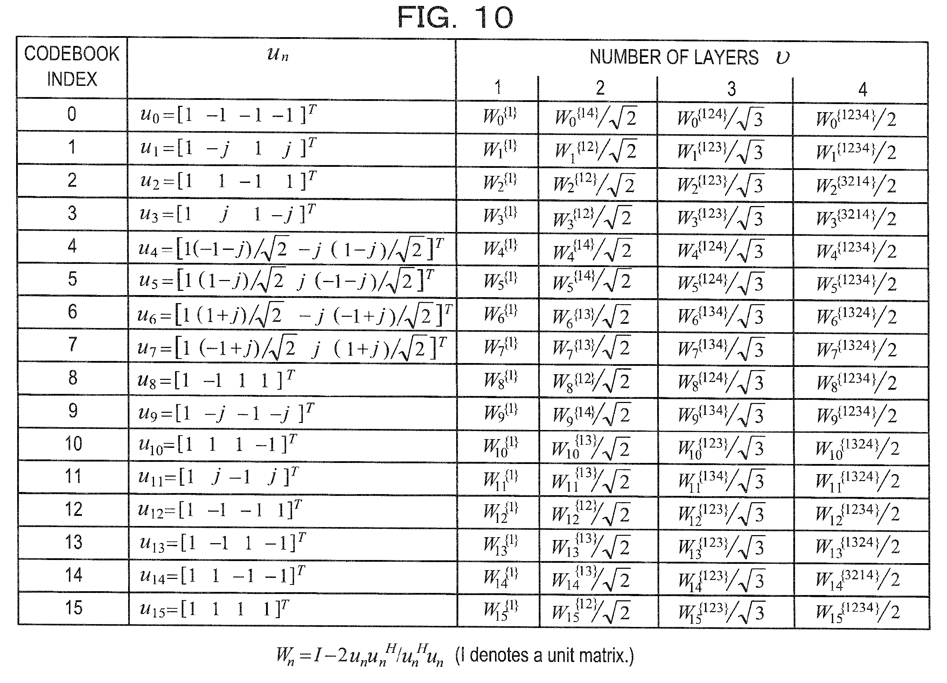

For example, when four transmission antennas are used in the LTE system, a codebook as illustrated in FIG. 10 is used. This codebook may be read basically in the same manner as in the codebook of FIG. 9. However, in FIG. 10, each codebook matrix for "Number of layers υ = 1" has four rows and one column (the number of antennas = 4, the number of signals = 1), each codebook matrix for "Number of layers u = 2" has four rows and two columns (the number of antennas = 4, the number of signals = 2), each codebook matrix for "Number of layers υ = 3" has four rows and three columns (the number of antennas = 4, the number of signals = 3), and each codebook matrix for "Number of layers u = 4" has four rows and four columns (the number of antennas = 4, the number of signals = 4).

In this way up to four types of signals may be simultaneously transmitted with the four antennas.

While the same power ratio applies to all in the case of FIG. 9, both the phase rotation amount and the power ratio are controlled in the case of FIG. 10.

With a codebook as illustrated in FIGS. 9 and 10 kept in both the radio mobile station and the radio base station, it is possible in the LTE system to substitute designation of simple number information, i.e., a codebook index, for designation of a complicated combination of the phase rotation amount and the power ratio of transmission signals for two or four transmission antennas.

In the other technique in the distributed antenna system, i.e., the pilot signal control technique, the radio base station transmits pilot signals known to both the transmitter and the receiver. The radio base station inserts the pilot signals into all subcarriers in order to allow the radio mobile station to perform channel estimation for the received signals. The radio mobile station receives the pilot signals and thereby performs the channel estimation for the received signals in order to estimate the phase rotation amount and the power ratio of the received signal from each antenna, and uses them to perform communication.

Because the pilot signals need to be accurately received at the radio mobile station certain controls exist to improve the reception quality of the pilot signals in conventional multi-antenna systems such as LTE. In order to prevent interference of signal transmissions from a plurality of transmission antennas concentratedly connected near the radio base station, no signals are transmitted from other transmission antennas with the same timing as a pilot signal transmitted from one transmission antenna.

However, conventional multi-antenna systems such as the LTE have the number of antennas fixed to two or four. In the case as illustrated in FIG. 8 where many RAUs 802 are located remotely from the CU 801 serving as a radio base station, the above-described conventional PMI control and pilot signal control may encounter the following problems.

In the above-described conventional PMI control using a codebook, codebook matrixes are used that correspond to all PMI-controllable antennas. Therefore, an increase in the number of RAUs 802 in FIG. 8 necessitates an increase in the size of the codebook matrixes as well as a dramatic increase in the number of codebook indexes. As a result, it becomes difficult to provide the codebook in the radio mobile station such as a mobile phone.

Also, to flexibly switch PMI-controlled antennas, information for designating the PMI-controlled antennas needs be transmitted and received.
The information for designating the antennas consumes valuable radio resources.

Further, in the above-described conventional pilot signal control, an increase in the number of RAUs 802 in FIG. 8 means pilot signals must be transmitted from many antennas. These increased transmissions of the pilot signals cause an increase in the period during which data transmission is stopped in the RAUs 802. Therefore, the efficiency of communication is reduced.

### SUMMARY

Accordingly, the object of one embodiment of the invention is to realize more efficient transmission control (e.g., PMI control) and pilot signal control.

According to a certain aspect of the invention, a control method in a mobile communication system comprising an antenna group including a plurality of antennas each transmitting different antenna identification information, the control method includes three steps: first, assigning identification information that allows distinction among antennas included in an antenna subgroup to each antenna included in the antenna subgroup, the antenna subgroup being part of the antenna group; second, notifying the correspondence between each antenna included in the antenna subgroup and the identification information to a mobile station; and third, the mobile station using the identification information to distinguish among the antennas included in the antenna subgroup based on the notified correspondence.

It is to be understood that both the foregoing general description and the following detailed description are exemplary and explanatory and are not restrictive of the invention, as claimed.

### BRIEF DESCRIPTION OF DRAWINGS

FIG. 1 is a system configuration example of a distributed antenna system according to embodiments;

FIG. 2 is a configuration example of a radio mobile station 104 in FIG. 1 in the embodiments;

FIG. 3 is a configuration example of a CU 101 in FIG. 1 in the embodiments;

FIG. 4 is a configuration example of a CQI table;

FIG. 5 is a configuration example of a codebook in a second embodiment;

FIG. 6 is a diagram (No. 1) of a flow of a resource allocation process for pilot signals and data in a fourth embodiment;

FIG. 7 is a diagram (No. 2) of a flow of a resource allocation process for pilot signals and data in the fourth embodiment;

FIG. 8 is a typical system configuration example of a distributed antenna system;

FIG. 9 is a configuration example of a conventional PMI codebook (No. 1); and

FIG. 10 is a configuration example of a conventional PMI codebook (No. 2).

### DESCRIPTION OF EMBODIMENTS

Embodiments for carrying out present invention are described with reference to the figures.

The first aspect described below uses a control method in a mobile communication system including an antenna group with a plurality of antennas each transmitting different antenna identification information, including: a first step of assigning identification information that allows distinction among antennas included in an antenna subgroup to each antenna included in that subgroup, the antenna subgroup being part of the antenna group; a second step of notifying the correspondence between each antenna included in that subgroup and the identification information to a mobile station; and a third step of the mobile station using the identification information to distinguish among the antennas included in that subgroup based on the notified correspondence.

A second aspect assumes a radio communication method in which a base station (101) to which a plurality of antennas (102) are connected via communication lines (103) uses the plurality of antennas to perform cooperative radio communication (transmission diversity, MIMO) with a mobile station (104), the mobile station controlling a communication characteristic of each antenna, while performing channel estimation for each antenna during every first period and communicating control information (such as a PMI) on the communication characteristic of the antennas with the base station based on the channel estimation. In the alternative, the second aspect assumes the base station or the mobile station implementing functions equivalent to the method.

A fifth step (201) includes, in the mobile station, measuring reception power from each antenna during a second period which is sufficiently longer than the first period. At this point, the fifth step includes measuring the reception power from each antenna by measuring and averaging power of a pilot signal for the channel estimation from each antenna during the second period which is sufficiently longer than the first period.

A sixth step (202) includes, in the mobile station, first selecting a predetermined number of antennas providing high reception power as communication antenna candidates and then communicating the communication antenna candidates and the corresponding reception power back to the base station.

A seventh step (301) includes, in the base station, first determining, based on the communicated communication antenna candidates and corresponding reception power, which antennas capable of being used in performing communication with the mobile station, and then assigning antenna index information (208) to the determined communication-capable antennas, and notifying their correspondence to the mobile station.

An eighth step (203) includes, in the mobile station, performing the channel estimation during every first period for the communication-capable antennas communicated from the base station.

A ninth step (204 to 206, 302, and 303) includes, in the mobile station and the base station, controlling the communication characteristic of each antenna for use in performing data communication, while using the antenna index information to communicate the control information on the communication characteristic of the communication-capable antennas with each other based on the channel estimation. In this ninth step, for example, the mobile station and the base station each have a communication characteristic information codebook holding a plurality of communication characteristic information sets (codebook matrixes) designating pieces of communication characteristic information corresponding in number to the number of communication-capable antennas. The codebook matrixes also contain the communication characteristic information including a phase rotation amount and a power ratio of a signal communicated using an antenna. The mobile station and the base station then select one of the communication characteristic information sets held in the communication characteristic information codebook based on the channel estimation and communicate identification information (a codebook index) on the selected set as part of the control information. The mobile station and the base station then determine a corresponding antenna group among the plurality of antennas from correspondence between the identification information and the antenna index information and control the communication characteristic of the antenna group based on the communication characteristic information set that can be identified from the codebook by the identification information. Also in this ninth step, for example, the mobile station and the base station may be adapted to reduce the size of the communication characteristic information codebook by the amount corresponding to antennas for which communication is stopped among the antennas corresponding in number to the number of communication-capable antennas. The mobile station and the base station then communicate, as part of the control information, identification information that identifies the communication characteristic information codebook of a reduced size and index information which designates antennas for use in performing communication. For example, the communication characteristic information may be adapted to include, as a value of the power ratio, a zero value that indicates to stop communication for a certain antenna among the antennas corresponding in number to the number of communication-capable antennas.

A third aspect assumes a radio communication method in which a base station (101) to which a plurality of antennas (102) are connected via communication lines (103) uses the plurality of antennas to perform cooperative radio communication with a mobile station (104). In this aspect, the mobile station controls whether or not to perform communication with each antenna, while performing channel estimation for each antenna during every first period and communicating selection information on the antennas with the base station based on the channel estimation., Or, in the alternative, the third aspect assumes the base station or the mobile station implementing functions equivalent to the method.

A fifth step (201) includes, in the mobile station, measuring reception power from each antenna during a second period which is sufficiently longer than the first period. At this point, for example, the fifth step includes measuring the reception power from each antenna by measuring and averaging power of a pilot signal for the channel estimation from each antenna during the second period which is sufficiently longer than the first period.

A sixth step (202) includes, in the mobile station, selecting a predetermined number of antennas providing high reception power as communication antenna candidates and then transmitting the communication antenna candidates and the corresponding reception power to the base station.

A seventh step (301) includes, in the base station, determining, based on the transmitted communication antenna candidates and corresponding reception power, communication-capable antennas capable of being used in performing communication with the mobile station, assigning antenna index information to the determined communication-capable antennas, and communicating their correspondence to the mobile station.

An eighth step (203) includes, in the mobile station, performing the channel estimation during every first period for the communication-capable antennas notified from the base station.

A ninth step includes, in the mobile station and the base station, selecting antennas for use in performing data communication, while selecting the antennas for use in performing the data communication among the communication-capable antennas based on the channel estimation and using the antenna index information to communicate the selection information with each other.

A fourth aspect is a control method in a mobile communication system including an antenna group with a plurality of antennas each transmitting different antenna identification information. This aspect includes a tenth step of selecting an antenna subgroup from the antenna group and using communication-capable antennas included in the antenna subgroup to perform communication. This aspect also includes and an eleventh step of, in communication resources in which pilot signals for channel estimation are transmitted from the communication-capable antennas, not performing the data communication with antennas other than the communication-capable antennas, but while in communication resources in which pilot signals for the channel estimation are transmitted from antennas other than the communication-capable antennas, performing the data communication with the antennas other than non-communication capable antennas.

A fifth aspect is a control method in a mobile communication system including an antenna group with a plurality of antennas each transmitting different antenna identification information. This aspect includes a twelfth step of selecting an antenna subgroup from the antenna group and using communication-capable antennas included in the antenna subgroup to perform communication. This aspect also includes a thirteenth step of, in communication resources in which pilot signals for channel estimation are transmitted from communicating antennas with which the data communication is being performed, not performing the data communication with antennas other than the communicating antennas, while in communication resources in which pilot signals for the channel estimation are transmitted antennas other than the communicating antennas, performing the data communication with the antennas other than the non-communication-capable antennas.

First Embodiment

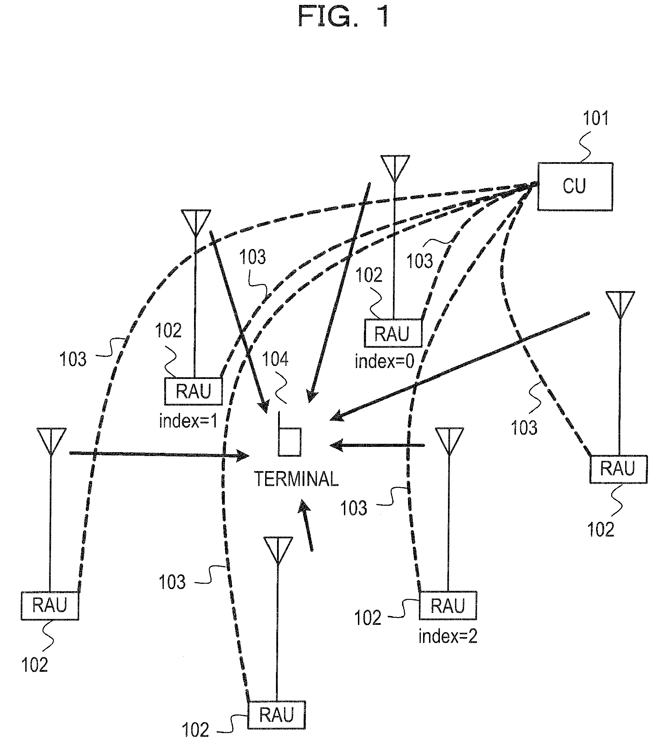

FIG. 1 is a system configuration diagram according to the embodiments.

In a system in FIG. 1, a plurality of remotely located antennas (a plurality of RAUs) 102 in radio communication with a radio mobile station 104 are connected to a CU 101 serving as a radio base station via wired lines 103 such as optical fibers. Although six antennas are illustrated here, more than six antennas may be used. In FIG 1, a group of M antennas is assumed. Although all the M antennas are all connected to one radio base station here, they may be connected to different radio base stations.

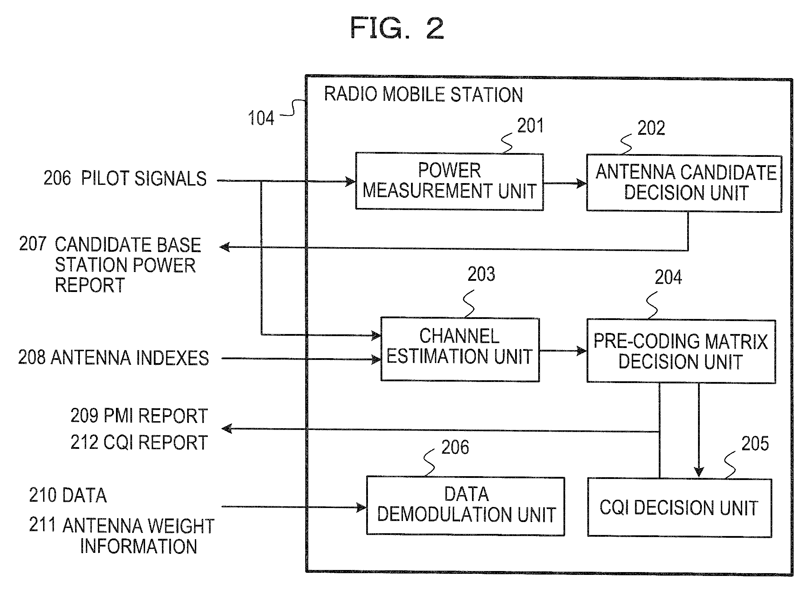

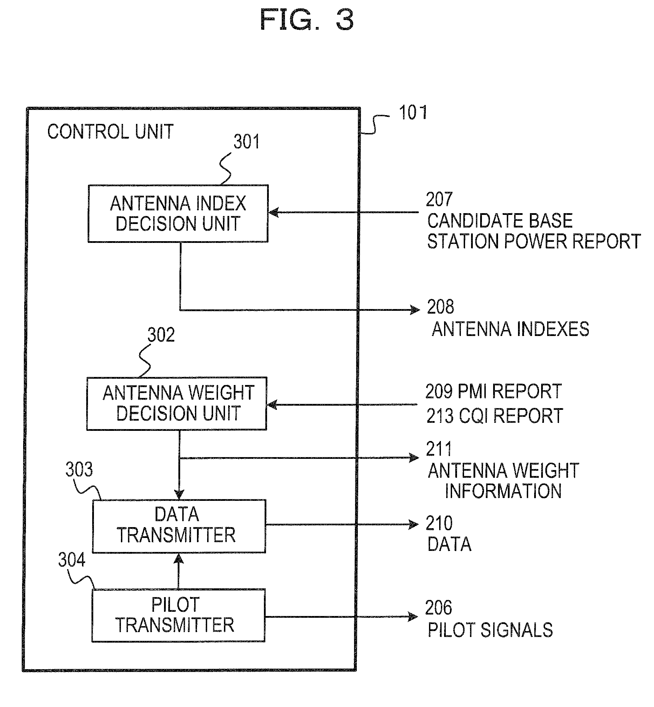

FIG. 2 is an example of a configuration of the radio mobile station 104 in FIG. 1 in the embodiments. FIG. 3 is an example of a configuration of the CU 101 in FIG. 1 in the embodiments.

First, in the radio mobile station 104 illustrated in FIG. 2, a power measurement unit 201 measures the reception power of a pilot signal 206 from each RAU 102.

An antenna candidate decision unit 202 averages the measurements over a long period (e.g., on the order of every several seconds to every several tens of seconds) and determines RAUs 102 as a subgroup of top desirable N (N < M) antennas from which future reception may be desirable. The power measurements of these RAUs 102 are radio-transmitted as a candidate base station power report 207. At this point, the candidate base station power report 207 may be communicated in an RRC (Radio Resource Control) message. The radio mobile station reports the measured power values in association with antenna identification information such as pilot-signal pattern information. This allows the radio base station to recognize the correspondence between the antennas as well as the measured power values.

The RRC protocol is a Layer 3 protocol for controlling radio lines in the W-CDMA scheme. In the LTE, an RRC Connection Reconfiguration message is used at the time of handover. This embodiment may conform to this protocol to transmit indexes (antenna indexes) that identify the above selected N RAUs 102. Although details of an RRC data format will not be described here, an optional field may be used that is defined in detail in the 3GPP TS (Technical Specification) 36.331 6.2.2 issued by 3GPP (3rd Generation Partnership Project), a standardization organization for the W-CDMA scheme.

In the radio mobile station 104, RAUs 102 for use in data communication are initially not determined. The above RRC communication is performed using a predetermined RAU 102, and after antenna indexes 208 are determined, the selected RAUs 102 are used.

In the CU 101 illustrated in FIG. 3, an antenna index decision unit 301 selects N RAUs 102 at the maximum power based on the candidate base station power report 207 transmitted from the radio mobile station 104. The antenna index decision unit 301 then assigns (provides) the antenna indexes 208 as identification information to the RAUs 102. Top N RAUs may be selected, or up to N RAUs having measured power within x dB (x may be 10, for example) from a RAU 102 having the highest measured power may be selected. This processing occurs with low frequency, performed on the basis of intervals of typical occurrences of handover and the like - i.e., every second or longer. For example, if the above-mentioned N is 4, an antenna index 208 can be expressed in 2 bits.

After this determination of the antenna indexes 208, the antenna indexes 208 are used to identify the antennas by sending transmission control information from the radio mobile station 104 to the CU 101 serving as a radio base station (e.g., notification of a PMI and CQIs (to be described later) and notification of a downlink control signal from the CU 101 to the radio mobile station 104). This process enables various sorts of increasing the efficiency of control.

The above antenna index decision unit 301 uses a downlink control channel to notify the correspondence between the antenna identification information on the above selected N RAUs 102 and the antenna indexes 208 provided to these RAUs 102 to the radio mobile station 104.

The radio mobile station 104 may use the communicated antenna indexes to identify the antennas. For example, all or a set of some of the subgroup of the N antennas may be identified by the antenna indexes The identified antenna indexes may then be transmitted to the radio base station. Thus, PMI-controlled antennas may be limited to the antennas corresponding to the previously selected antenna indexes. Additionally, a PMI codebook corresponding to the number of selected antennas may be used. In this way, the content defined in the codebook can be simplified.

In order to limit the PMI-controlled antennas (the antennas to which PMI feedback is transmitted) in both the radio base station and the radio mobile station to antennas selected from the subgroup of the N antennas, antenna indexes corresponding to the selected antennas may be transmitted to the radio mobile station. This would allow for a change or limit in the number of PMI-controlled antennas.

Conventionally, antenna-specific antenna identification information that allows distinction among the antennas in the antenna group is transmitted. Instead, in the above manner, the identification information (the antenna indexes) that allows distinction among the antennas in the antenna subgroup is used. In this way, antenna designation between the radio mobile station and the radio base station can be realized with increased efficiency.

In the radio mobile station 104, a channel estimation unit 203 illustrated in FIG. 2 performs channel estimation for the RAUs 102 to which the antenna indexes 208 have been provided.

Subsequently, based on values of this channel estimation, a pre-coding matrix decision unit (as an example of an identifying unit) 204 determines, as a PMI, the proper codebook matrix of phase rotation amounts and power ratios suitable for the transmission diversity or the MIMO for the above RAUs 102 to which the antenna indexes 208 have been provided. At this point, the antennas for which the PMI is determined may be identified using the antenna indexes. The antenna indexes may be transmitted to the radio base station preferably along with the PMI information. The radio base station then recognizes that the PMI information is transmitted for the antennas designated by the communicated antenna indexes. Importantly, antenna index information for designating the antennas to which a feedback signal for the PMI control is to be sent may be transmitted from the radio mobile station to the radio base station separately from the PMI information. In other words, PMI information and antenna index information can be communicated between the radio mobile station and the radio base station separately.

With respect to the PMI, a codebook defined according to specifications in the same manner as in FIGS. 9 and 10 described above is shared by the radio mobile station 104 and the CU 101. The PMI is determined as a codebook index corresponding to a codebook matrix determined by the pre-coding matrix decision unit 204 from this codebook. The codebook may correspond to P antennas fewer than the N antennas for which the antenna indexes are communicated. In that case, the codebook may be simplified. Precisely which N antennas are chosen as the PMI-controlled P antennas may be flexibly changed, and antenna designation after the change may be realized with smaller amount of information by both of the radio mobile station and the radio base station using the antenna indexes.

That is, in the distributed antenna system as illustrated in FIG. 1, the antennas are physically distant from each other. Therefore, for transmission with an improved reception characteristic, it is often more advantageous to use only certain RAUs 102 (N or P RAUs) than to use all the M RAUs 102. As such, in this embodiment, a codebook of a size suitable for the number of above selected RAUs 102 N or P is prepared as the above-described codebook. At this point, since the number of RAUs 102 N or P is sufficiently limited, the codebook may be of a small size with fewer rows of codebook matrixes. In this way, the codebook may be adequately stored in the radio mobile station 104. Also, since the range of the codebook indexes themselves is reduced, the number of bits necessary for communicating the codebook indexes may be reduced.

A CQI (Channel Quality Indicator) decision unit 205 calculates a CQI as the combined quality for a case where the phase rotation amount and the power ratio based on the PMI determined by the pre-coding matrix decision unit 204 are applied to each of the RAUs 102 to which the above antenna indexes 208 have been provided.

The CQI represents the transmission rate and reflects the communication quality;. A number of transmission rates can be represented by combinations of the modulation scheme, transmission rate, coding rate, and the like.

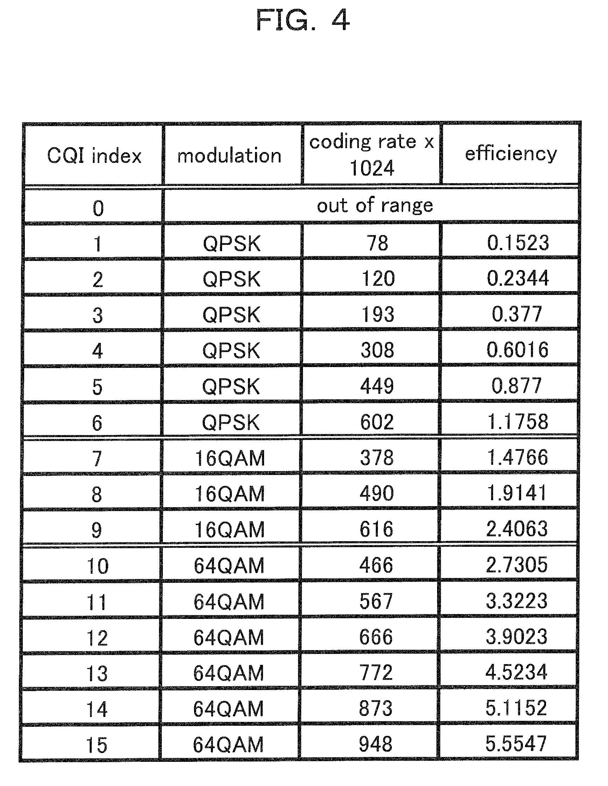

With respect to the CQI, similar to the PMI, a table as illustrated in FIG. 4 may be kept in both of the radio mobile station 104 and the CU 101. This table may be used to identify a CQI for each antenna as a pair of an antenna index and a CQI index. In other words, the radio mobile station measures the reception quality of a signal received from each antenna, identifies a CQI index corresponding to the reception quality, and transmits the identified CQI index to the radio base station. At this point, the radio mobile station transmits the antenna index of the antenna for which the CQI index has been identified and the identified CQI index to the radio base station.

Thus, by using the less information, i.e., the identification information (the antenna indexes) rather than using the antenna identification information that allows distinction among antennas in the group of the M antennas, the antennas may be designated with the smaller amount of information when transmitting a CQI report. In FIG. 4, "CQI index" represents the above index numbers, "modulation" represents modulation schemes, "coding rate" represents transmission rates (kilobits/s), and "efficiency" represents coding rates.

The radio mobile station 104 uses an uplink control signal to communicate to the CU 101 the PMI and the CQIs determined by the pre-coding matrix decision unit 204 and the CQI decision unit 205 in the above manner respectively, as a PMI report 209 and a CQI report 212.

Details of the uplink control signal are defined in 3GPP TS 36.213 7.2.2.

In the CU 101, an antenna weight decision unit (communication characteristic control unit) 302 illustrated in FIG. 3 receives the above PMI report 209 and CQI report 212. After performing negotiations and the like with other radio mobile stations 104, the antenna weight decision unit 302 determines antenna indexes, phase rotation amounts, power ratios and the like to be actually used for transmission. This information is communicated as antenna weight information 211 to the radio mobile station 104 by using a downlink control signal.

This antenna weight information 211 is received by the radio mobile station 104 illustrated in FIG. 2 and then set in a data demodulation unit 206. Then, based on the antenna weight information 211, the data demodulation unit 206 assigns a weight to the channel estimate obtained from the pilot signal of each RAU 102 in order to determine a combined channel estimate. This combined channel estimate is then used to perform data demodulation processing.

Thereafter, the determined RAUs 102 are used to perform an actual transmission process for data 210 from a data transmitter 303 in the CU 101 in FIG. 3 to the data demodulation unit 206 in the radio mobile station 104 in FIG. 2.

A pilot transmitter 304 in FIG. 3 generates and transmits the pilot signals described in the Background section.

According to the above-described first embodiment, it is possible in the distributed antenna system to reduce the size of the codebook for the PMI control. As a result, a reduction of hardware load on the radio mobile station and the reduction of PMI communication load between the radio mobile station and the radio base station may be realized.

Second Embodiment

A second embodiment will be described.

Configurations in the second embodiment are the same as the configurations in the first embodiment illustrated in FIGS. 1 to 3.

The second embodiment differs from the first embodiment first in the PMI determination in the pre-coding matrix decision unit 204 in the radio mobile station 104 in FIG. 2, and also in the pre-coding matrixes used in the antenna weight decision unit 302 in the CU 101 in FIG. 3.

In the distributed antenna system as illustrated in FIG. 1, the RAUs 102 are very distant from each other compared to a plurality of antennas located in a typical radio base station. Therefore, differences of the average power among the RAUs 102 may be substantially larger than in the conventional art.

If the power differences among the antennas are small, the characteristic may be improved by simultaneous in-phase transmission from these antennas. However, if the power of one antenna is predominant, it is better and more efficient to transmit only from that antenna. Also, it may often be better and more efficient to select only two of many antennas.

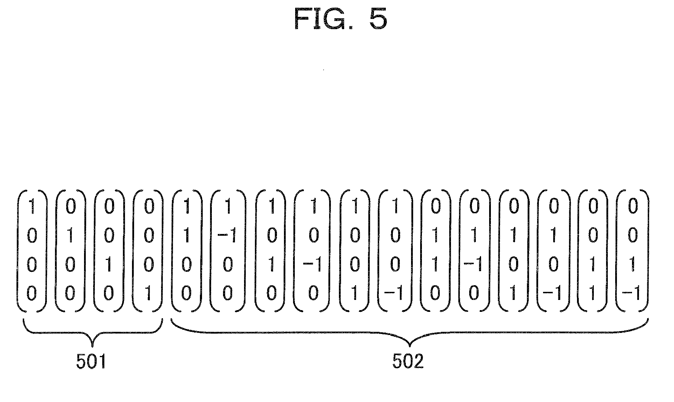

The PMI codebooks in the conventional art shown in FIGS. 9 and 10 assume antennas at approximately the same place. Therefore, the codebooks are configured so that the power from each antenna can be treated as equal. In contrast, in the second embodiment, a codebook with inequality among the RAUs 102 as illustrated in FIG. 5 is used.

In FIG. 5, each column vector may be read in the same manner as in the case of FIG. 9. In FIG. 5, the total number of RAUs is set to 4, the maximum number of transmission RAUs is set to 2, and control of phase differences among the RAUs is set on a 180-degree basis. It is important to note that codebook design with a limited maximum number of transmission RAUs is possible. Similarly, codebook design with limits on other parameters is also possible.

In FIG. 5, a group of column vectors denoted by 501 indicates PMIs in which only one of the four RAUs 102 is selected. A group of column vectors denoted by 502 indicates PMIs in which just two of the four RAUs 102 are selected.

Thus, in the second embodiment, assuming the distributed antenna system, more efficient communication may be realized without any degradation in communication quality while significantly narrowing the PMI codebook.

Third Embodiment

A third embodiment will be described.

Configurations in the third embodiment are also the same as the configurations in the first embodiment illustrated in FIGS. 1 to 3.

The third embodiment differs from the first embodiment in that, when the pre-coding matrix decision unit 204 in the radio mobile station 104 in FIG. 2 communicates the PMI report 209 to the CU 101, the pre-coding matrix decision unit 204 communicates antenna index numbers corresponding to the number of RAUs (= M) to be currently used, in addition to the PMI. Thus, this embodiment is characterized in that, since information corresponding to only the M antennas needs to be transmitted as the PMI, the amount of information may be reduced accordingly.

If situations where using two RAUs 102 is appropriate, antenna index numbers and a PMI for two RAUs 102 are fed back to the CU 101.

For example, the following rules may be applied in determining the number of antennas M:

If no RAUs 102 have a measured power value within 5 dB from a RAU 102 having the highest measured power, M = 1. (2) If one RAU 102 has a measured power value within 5 dB from the RAU 102 having the highest measured power and no other RAUs 102 have a measured power value within 7 dB, M = 2. (3) If one RAU 102 has a measured power value within 5 dB from the RAU 102 having the highest measured power and no other RAUs 102 have a measured power value within 7 dB, M = 3.

From the viewpoint of fairness to other users, the ratio of allocation of frequency or time resources to the communication of the user in question may be 1/2 if the number of RAUs 102 is 2, and the ratio of allocation of the frequency or time resources may be 1/3 if the number of RAUs 102 is 3. In such a manner, it is desirable to select the ratio so that the overall communication quality of the entire radio communication network is improved.

Here, to the N-M unassigned RAUs 102, data intended for other users may be or may not be allocated. While it is better to allocate other users from the viewpoint of the ability to transmit more data, it is better not to allocate from the viewpoint of the reduction in interference with the user in question.

Fourth Embodiment

A fourth embodiment will be described.

Configurations in the fourth embodiment are also the same as the configurations in the first embodiment illustrated in FIGS. 1 to 3.

The fourth embodiment relates to a technique of increasing the effective efficiency of communication while maintaining the quality of pilot signals.

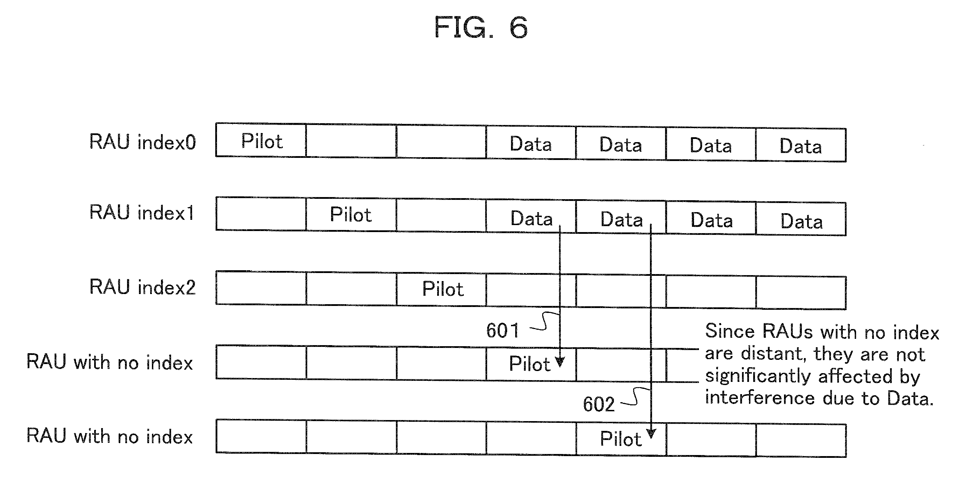

When the data transmitter 303 in the CU 101 in FIG. 3 transmits communication data, the data transmitter 303 does not allocate communication data of other RAUs 102 to resource positions of pilot signals allocated by the pilot transmitter 304 for RAUs 102 to which antenna indexes 208 have been assigned (see FIG. 2 or 3). However, as illustrated by 601 and 602 in FIG. 6, the data transmitter 303 permits allocating communication data of other RAUs 102 to resource positions of pilot signals allocated by the pilot transmitter 304 for RAUs 102 to which no antenna indexes 208 have been assigned.

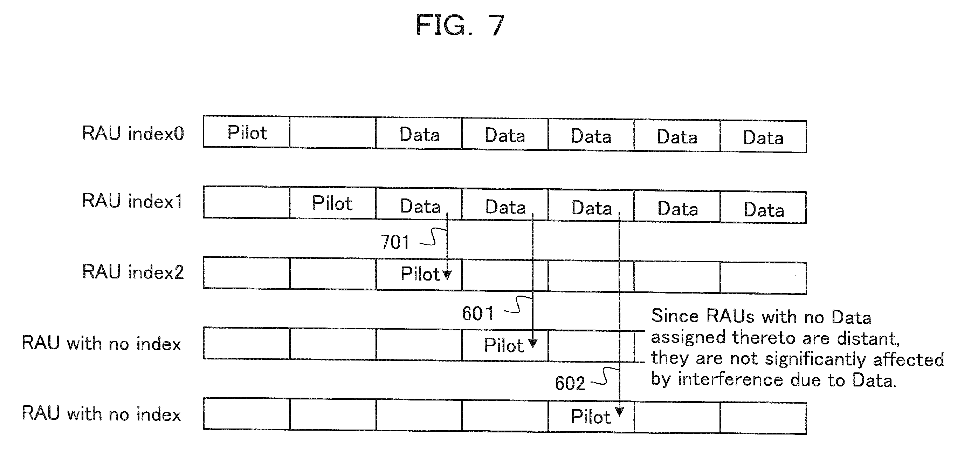

Alternatively, as illustrated by 701 in FIG. 7, when the data transmitter 303 transmits communication data, the data transmitter 303 may permit the allocation of communication data of other RAUs 102 to a resource position of a pilot signal allocated by the pilot transmitter 304 for a RAU 102 to which an antenna index 208 has been assigned but which is currently not transmitting communication data.

Pilots of adjacent RAUs are not supposed to be allocated to the same position by means of frequency shift or the like. Thus, the amount of data assignment may be increased while maintaining the accuracy of the channel estimation performed by the channel estimation unit 203 of the radio mobile station 104 for reception.

Although the above description has been given for the distributed antenna system having the configuration illustrated in FIG. 1, it is also applicable to a radio base station having a sector configuration.

Further, the above-described mechanism is also applicable to antennas among different base stations as long as the base stations can communicate with each other by some means so that cooperative scheduling is performed among the base stations and at the same data is forwarded to each base station to allow the data to be simultaneously transmitted.

In the above manner, the fourth embodiment allows only pilot signals to be received from RAUs 102 from which high power arrives at the radio mobile station 104. Therefore, the channel estimation unit 203 (FIG. 2) in the radio mobile station 104 can obtain channel estimates of greater quality. Since data may be allocated to pilot positions of other RAUs 102, the efficiency of frequency use may be increased.

If the RAUs 102 are narrowed to the M RAUs 102 along with the PMI transmission as in the third embodiment, the range over which the data does not overlap the pilots may be narrowed to M positions. This allows more data to be allocated to further increase the efficiency of frequency use.

In relation to the above-described fourth embodiment, an intermediate average of a long-period power average for determining an antenna index and a short-period power average for determining resource allocation may be used to allocate the data so as not to overlap the pilot signals.

In this case, in order to receive the data, the radio mobile station 104 needs to know which RAUs 102 have the data allocated so as not to overlap their pilot signals. As such, control information indicating resources with no data allocated thereto must be added to the downlink control channel.

This addition of information to the control channel is necessary not only in the case of using the intermediate average but also in the case of assigning the data in other ways.

Further, this method can also be used in uplink communication in the distributed antenna system. In other words, this method can be used in a downlink control signal for instructing the radio mobile station 104 to transmit data to designate an area in which no data is to be transmitted for ensuring the quality of pilot signals of other users.

The following method may also be adopted: a guideline is set in advance such that neighboring RAUs 102 are controlled so that their resource positions of pilot signals do not overlap. Distant RAUs 102 are allowed to have their resource positions of pilot signals overlapping. In accordance with this guideline, pilots are allocated to the RAUs 102 to make the pilot signal area small, and no data is allocated to the pilot signal area.

Fifth Embodiment

A fifth embodiment will be described.

The fifth embodiment is adapted to determine the antenna indexes as in the first embodiment.

However, the radio mobile station 104 does not communicate the PMI to the CU 101 but only communicates the antenna indexes of the RAUs 102 to be used to the CU 101.

The CU 101 performs a transmission process directed to the radio mobile station 104 from the communicated RAUs 102.

Since phase control is not performed, the radio mobile station 104 simply adds up channel estimation determined from the pilot signal of each RAU 102 in order to determine a combined channel estimate. The radio mobile station then demodulates the data.

A method may also be adopted in which the phase is aligned among each RAUs 102 based on estimation of incoming directions of uplink signals and the like. In this case, individual pilots are separately transmitted from the CU 101 to the radio mobile station 104. The radio mobile station 104 uses the individual pilots to perform the channel estimation and demodulates data.

In this manner, even in the distributed antenna system in which the PMI control is not performed as illustrated in the fifth embodiment, antennas for use in communication may be optimally selected.

According to the above-described embodiments, efficient transmission control (e.g., PMI control) may be performed.

Also, increased efficiency of pilot signal control can be realized.

It is also possible in the distributed antenna system to reduce the total size of the codebook for the PMI control. As a result, the reduction of hardware load on the mobile station and the reduction of PMI communication load between the mobile station and the base station are realized.

It is also possible to create more efficient communication without degrading the communication quality and simultaneously signifcantly narrowing the PMI codebook in the distributed antenna system.

Moreover, the mobile station can obtain channel estimates of good quality by allowing only pilot signals to be received from RAUs from which high power arrives at the mobile station. Since data can be allocated to pilot positions of other RAUs, the efficiency of frequency use can be increased.

Even in the distributed antenna system in which the PMI control is not performed, antennas for use in communication can be optimally selected.
All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the spirit and scope of the invention.

## Claims

1. A control method in a mobile communication system comprising an antenna group including a plurality of antennas each transmitting different antenna identification information, the control method comprising:
assigning identification information that allows each antenna included in the antenna subgroup to be uniquely identified, the antenna subgroup being part of the antenna group;
notifying the correspondence between each antenna included in the antenna subgroup and the identification information to a mobile station; and
the mobile station using the antenna identification information to distinguish among the antennas included in the antenna subgroup based on the notified correspondence.

2. The control method according to claim 1, further comprising
the mobile station transmitting information about a specific antenna included in the antenna subgroup in association with the identification information corresponding to that specific antenna.

3. The control method according to claim 2, wherein
the information about that specific antenna is PMI information or CQI information about that specific antenna.

4. A communication characteristic control method in the control method according to claim 1, 2 or 3, wherein the control method in the mobile communication system is a radio communication method in which a base station to which a plurality of antennas are connected via communication lines uses the plurality of antennas to perform cooperative radio communication with a mobile station, the mobile station controlling a communication characteristic of each antenna, while performing channel estimation for each antenna during every first period and communicating control information on the communication characteristic of the antennas with the base station based on the channel estimation, and
the assigning comprises:
the mobile station measuring the reception power of each antenna during a second period which is sufficiently longer than the first period;
the mobile station selecting a predetermined number of antennas providing high reception power as communication antenna candidates and notifying the communication antenna candidates and the corresponding reception power to the base station; and
the base station determining, based on the notified communication antenna candidates and corresponding reception power, communication-capable antennas capable of being used in performing communication with the mobile station, assigning antenna index information as the identification information to the determined communication-capable antennas, and notifying the correspondence between the communication-capable antennas and the antenna index information to the mobile station, and
the control method further comprises:
the mobile station performing the channel estimation during every first period for the communication-capable antennas communicated from the base station; and
the mobile station and the base station controlling the communication characteristic of each antenna for use in performing data communication, while using the antenna index information to communicate the control information on the communication characteristic of the communication-capable antennas with each other based on the channel estimation.

5. The communication characteristic control method in the control method according to claim 4, wherein
the base station and the mobile station having a communication characteristic information codebook including a plurality of communication characteristic information sets each designating pieces of communication characteristic information corresponding in number to the number of communication-capable antennas, the communication characteristic information including a phase rotation amount and a power ratio of a signal communicated using an antenna,
selecting one of the communication characteristic information sets held in the communication characteristic information codebook based on the channel estimation and transmitting identification information on the selected set as part of the control information, and
determining a corresponding antenna group among the plurality of antennas from the correspondence between the identification information and the antenna index information and controlling the communication characteristic of the antenna group based on the communication characteristic information set that can be identified from the codebook by the identification information.

6. The communication characteristic control method in the control method according to claim 5, wherein
the mobile station and the base station:
reducing the size of the communication characteristic information codebook by the amount corresponding to antennas for which communication is stopped among the antennas corresponding in number to the number of communication-capable antennas, and
transmitting, as part of the control information, identification information that identifies the communication characteristic information codebook of a reduced size and index information that designates antennas for use in performing communication.

7. The control method according to claim 4, wherein
the mobile station measuring the reception power from each antenna by measuring and averaging power of a pilot signal for the channel estimation from each antenna during the second period which is sufficiently longer than the first period.

8. A method of controlling whether or not to perform communication in the control method according to claim 1, 2 or 3, wherein the control method in the mobile communication system is a radio communication method in which a base station to which a plurality of antennas are connected via communication lines uses the plurality of antennas to perform cooperative radio communication with a mobile station, the mobile station controlling whether or not to perform communication with each antenna, while performing channel estimation for each antenna during every first period and communicating selection information on the antennas with the base station based on the channel estimation, and
the assigning comprises:
the mobile station measuring reception power from each antenna during a second period which is sufficiently longer than the first period;
the mobile station selecting a predetermined number of antennas providing high reception power as communication antenna candidates and transmitting the communication antenna candidates and the corresponding reception power to the base station; and
the base station determining, based on the transmitted communication antenna candidates and corresponding reception power, communication-capable antennas capable of being used in performing communication with the mobile station, assigning antenna index information as the identification information to the determined communication-capable antennas, and transmitting the correspondence between the communication-capable antennas and the antenna index information to the mobile station, and
the method further comprises:
the mobile station performing the channel estimation during every first period for the communication-capable antennas transmitted from the base station; and
the mobile station and the base station selecting antennas for use in performing data communication, while selecting the antennas for use in performing the data communication among the communication-capable antennas based on the channel estimation and using the antenna index information to communicate the selection information with each other.

9. A base station in a mobile communication system comprising an antenna group including a plurality of antennas each transmitting different antenna identification information, comprising:
a decision unit to assign identification information to each antenna included in the antenna subgroup that allows distinction among antennas included in an antenna subgroup, the antenna subgroup being part of the antenna group; and
a transmitting unit to notify the correspondence between each antenna included in the antenna subgroup and the identification information to a mobile station.

10. The base station according to claim 9, wherein
the base station has a plurality of antennas connected thereto via communication lines and uses the plurality of antennas to perform cooperative radio communication with the mobile station, the mobile station performing channel estimation for each antenna during every first period, and the base station controls a communication characteristic of each antenna while communicating control information on the communication characteristic of the antennas with the mobile station based on the channel estimation,
the decision unit determines, based on communication antenna candidates and corresponding reception power notified from the mobile station, communication-capable antennas capable of being used in performing communication with the mobile station, assigns antenna index information to the determined communication-capable antennas, and notifies the correspondence between the communication-capable antennas and the antenna index information to the mobile station, and
the base station further comprises communication characteristic control unit to control the communication characteristic of each antenna for use in performing data communication, while using the antenna index information to communicate the control information on the communication characteristic of the communication-capable antennas with the mobile station based on the channel estimation in the mobile station.

11. The base station according to claim 10, wherein
the communication characteristic control unit
includes a communication characteristic information codebook holding a plurality of communication characteristic information sets each designating pieces of communication characteristic information corresponding in number to the number of communication-capable antennas, the communication characteristic information including a phase rotation amount and a power ratio of a signal communicated using an antenna,
receives, as part of the control information, identification information for selecting one of the communication characteristic information sets held in the communication characteristic information codebook based on the channel estimation in the mobile station, and
determines a corresponding antenna group among the plurality of antennas from the correspondence between the identification information and the antenna index information and controls the communication characteristic of the antenna group based on the communication characteristic information set that can be identified from the codebook by the identification information.

12. A mobile station in a mobile communication system comprising an antenna group including a plurality of antennas each transmitting different antenna identification information, comprising:
an identifying unit to use identification information that allows distinction among antennas included in an antenna subgroup to distinguish among the antennas included in the antenna subgroup based on the correspondence notified from a base station between the identification information and each antenna included in the antenna subgroup, the antenna subgroup being part of the antenna group.

13. The mobile station according to claim 12, wherein
the mobile station uses a plurality of antennas to perform cooperative radio communication with the base station to which the plurality of antennas are connected via communication lines, and controls a communication characteristic of each antenna while performing channel estimation for each antenna during every first period and communicating control information based on the communication characteristic of the antennas with the base station based on the channel estimation, and
the mobile station further comprises:
a power measurement unit to measure reception power from each antenna during a second period which is sufficiently longer than the first period; and
antenna candidate decision unit to select a predetermined number of antennas providing optimal reception power as communication antenna candidates and notifying the communication antenna candidates and the corresponding reception power to the base station, wherein
the identifying unit comprises:
a channel estimation unit to receive communication-capable antennas and antenna index information assigned thereto from the base station and performing the channel estimation for the communication-capable antennas during every first period; and
a pre-coding matrix decision unit to control the communication characteristic of each antenna for use in performing data communication, while using the antenna index information to communicate the control information on the communication characteristic of the communication-capable antennas with the base station based on the channel estimation.

14. The mobile station according to claim 13, wherein
the pre-coding matrix decision unit includes a communication characteristic information codebook holding a plurality of communication characteristic information sets each designating pieces of communication characteristic information corresponding in number to the number of communication-capable antennas, the communication characteristic information including a phase rotation amount and a power ratio of a signal communicated using an antenna, and
selects one of the communication characteristic information sets held in the communication characteristic information codebook based on the channel estimation and transmits identification information on the selected set as part of the control information to the base station.

15. The method according to claim 5, the base station according to claim 11, or the mobile station according to claim 14, wherein
the communication characteristic information comprises, as a value of the power ratio, a zero value that indicates to stop communication for a certain antenna among the antennas corresponding in number to the number of communication-capable antennas.

16. The mobile station according to claim 14 or 15, wherein
the pre-coding matrix decision unit reduces the size of the communication characteristic information codebook by the amount corresponding to antennas for which communication is stopped among the antennas corresponding in number to the number of communication-capable antennas, and
transmits, as part of the control information, identification information that identifies the communication characteristic information codebook of a reduced size and index information that designates antennas for use in performing communication.

17. The mobile station according to any of claims 13 to 16, wherein
the power measurement unit measures the reception power from each antenna by measuring and averaging the power of a pilot signal for the channel estimation from each antenna during the second period which is sufficiently longer than the first period.

18. A pilot control method in a control method in a mobile communication system comprising an antenna group including a plurality of antennas each transmitting different antenna identification information, the pilot control method comprising:
selecting an antenna subgroup from the antenna group and using communication-capable antennas included in the antenna subgroup to perform communication; and
in communication resources in which pilot signals for channel estimation are transmitted from the communication-capable antennas, not performing the data communication with antennas other than the communication-capable antennas, while in communication resources in which pilot signals for the channel estimation are transmitted from antennas other than the communication-capable antennas, performing the data communication with the antennas other than the non-communicating antennas.

19. A pilot control method in a control method in a mobile communication system comprising an antenna group including a plurality of antennas each transmitting different antenna identification information, the pilot control method comprising:
selecting an antenna subgroup from the antenna group and using communication-capable antennas included in the antenna subgroup to perform the communication; and
in communication resources in which pilot signals for channel estimation are transmitted from communicating antennas with which the data communication is being performed, not performing the data communication with antennas other than the communicating antennas, while in communication resources in which pilot signals for the channel estimation are transmitted from antennas other than the communicating antennas, performing the data communication with the antennas other than the non-communicating antennas.
